# EUROPÄISCHE PATENTANMELDUNG

(11) **EP 4 741 148 A2**
(43) Veröffentlichungstag der Anmeldung: **13.05.2026**
(21) Anmeldenummer: 26167529.2
(22) Anmeldetag: 07.09.2023
(51) Int. Cl.: B29L 31/36

(54) **VERFAHREN ZUR HERSTELLUNG EINES HYBRIDBAUTEILS**

(30) Priorität: 12.09.2022 DE 102022123119
(62) Teilanmeldung aus: 23195987.5
(71) Anmelder: Erwin Quarder Systemtechnik GmbH, 32339 Espelkamp (DE)
(72) Erfinder: Funk, Johann, 32339 Espelkamp (DE); Heitbrink, Alexander, 32351 Stemwede (DE)
(74) Vertreter: Geskes, Christoph

(57) **Zusammenfassung**

Die vorliegende Erfindung betrifft ein Hybridbauteil (1) sowie ein Verfahren zum Herstellen eines Hybridbauteils (10) mit mindestens einem, insbesondere massiven Metallbauteil (11), das mindestens bereichsweise von Kunststoff umspritzt ist, insbesondere einem Kupferbauteil, bevorzugt einer Leiterbahn zur Leitung von elektrischem Strom. Das Verfahren ist gekennzeichnet durch folgende Schritte:
a) Bearbeiten eines Oberflächenbereichs (13) des Metallbauteils (11) mit einem Laserstrahl, insbesondere Einbringen von Nano- und/oder Mikrostrukturen in diesen Oberflächenbereich (13) mit dem Laserstrahl,
b1) Montieren und Aufschrumpfen eines Schrumpfschlauchs (14) auf den bearbeiteten Oberflächenbereich (13) des Metallbauteils (11) und danach Umspritzen des montierten und aufgeschrumpften Schrumpfschlauchs (14) mit Kunststoff, oder
b2) Aufbringen von insbesondere latent reaktivem Klebstoff auf den bearbeiteten Oberflächenbereich (13) des Metallbauteils (11) und danach Umspritzen des aufgebrachten Klebstoffs mit Kunststoff.

## Beschreibung

Die vorliegende Erfindung betrifft ein Verfahren zum Herstellen eines (spritzgegossenen) Hybridbauteils mit mindestens einem, insbesondere massivem, Metallbauteil, das mindestens bereichsweise von Kunststoff insbesondere fluiddicht umspritzt ist. Dabei kann das vorzugsweise aus Kupfer bestehende Metallbauteil insbesondere eine Leiterbahn zur Leitung von elektrischem Strom sein.

Derartige (spritzgegossene) Hybridbauteile aus mehreren Werkstoffen, nämlich aus Kunststoff und mit beispielsweise als Leiterbahnen ausgebildeten Metallbauteil(en), werden in verschiedensten technischen Gebieten eingesetzt. So etwa bei Elektromotoren als Bauteil, das die Statorwicklung kontaktiert und über das die drei Phasenleitungen des Elektromotors nach außen geführt werden.

Bei Bauteilen mit bei der Herstellung im Rahmen eines Spritzgießvorgangs umspritztem Metallbauteil besteht im späteren Einsatz die Gefahr, dass zwischen dem Metallbauteil und dem Kunststoff, der es umgibt bzw. mit dem es umspritzt ist, Undichtigkeiten entstehen. Vor allem Temperaturwechsel im späteren Einsatz können auf Grund von unterschiedlichen Ausdehnungskoeffizienten der beteiligten Materialien Mikrospalte zwischen dem Kunststoff und dem Metall verursachen. Derartige Mikrospalte wiederum führen - je nach Einsatzgebiet - ggf. zu unerwünschten Leckagen, Korrosion etc.

Aus der DE 10 2006 001 340 ist bekannt, einen Schrumpfschlauch auf ein Einlegeteil aufzuschrumpfen und dann das Einlegeteil in diesem Bereich zu umspritzen, um hierdurch eine ausreichende Dichtheit zu bewirken.

In der Praxis hat sich allerdings gezeigt, dass die hierdurch erzielte Dichtheit nicht ausreicht bzw. erhöhten Anforderungen nicht gewachsen ist.

Ausgehend hiervon ist es Aufgabe der vorliegenden Erfindung, das eingangs genannte Herstellungsverfahren zur Herstellung eines solchen Hybridbauteils mit von Kunststoff umspritztem Metallbauteil weiterzuentwickeln.

Diese Aufgabe wird gelöst durch ein Verfahren mit den Merkmalen des Anspruchs 1.

Demnach ist das erfindungsgemäße Verfahren durch folgende Merkmale gekennzeichnet:
a) Bearbeiten eines Oberflächenbereichs des Metallbauteils durch Beaufschlagen desselben mit einem Laserstrahl, sodass Nano- und/oder Mikrostrukturen in diesen Oberflächenbereich eingebracht werden, insbesondere Nano- und/oder Mikrostrukturen, die eine Vergrößerung der Oberfläche in dem Oberflächenbereich bewirken (im Vergleich zu einer nicht bearbeiteten bzw. nicht strukturierten Oberfläche des Oberflächenbereichs) und/oder Hinterschneidungen umfassende Vertiefungen aufweisen und/oder Widerhaken,
b) Montieren und Aufschrumpfen eines Schrumpfschlauchs auf den bearbeiteten Oberflächenbereich des Metallbauteils unter (direkter) Anlage des Schrumpfschlauchs an die Metalloberfläche des Metallbauteils und danach Umspritzen des montierten und aufgeschrumpften Schrumpfschlauchs mit Kunststoff unter (direkter) Anlage des Kunststoffs an dem Schrumpfschlauch.

Die Anmelderin hat überraschend erkannt, dass die Dichtheit bzw. die Langlebigkeit der Dichtheit zwischen Metallbauteil und umspritztem Kunststoff massiv erhöht werden kann, wenn der Oberflächenbereich des Metallbauteils, der im Rahmen des Spritzgießvorgangs umspritzt werden soll, zunächst wie angegeben bearbeitet wird mit einem Laserstrahl, und anders als im Stand der Technik erst danach ein bzw. der Schrumpfschlauch, der später umspritzt wird, auf den zu bearbeitenden Oberflächenbereich aufgeschrumpft wird. Durch die Bearbeitung der Oberfläche mit dem Laserstrahl erhöht sich die Dichtwirkung deutlich, vermutlich aufgrund einer verbesserten bzw. verzahnten Anlage des Schrumpfschlauchs an dem Metallbauteil.

Das Bearbeiten des Oberflächenbereichs bzw. das Einbringen der beschriebenen Nano- und/oder Mikrostrukturen in die Oberfläche desselben kann alternativ zu dem Beaufschlagen des Oberflächenbereichs mit einem Laserstrahl eines Lasers auch durch andere physikalische und/oder chemische Nano- oder Mikrostrukturierungsverfahren erfolgen, beispielsweise durch chemisches Ätzen.

Was das Metallbauteil des Hybridbauteils betrifft, so kann dieses im Übrigen in dem bearbeiteten Oberflächenbereich, auf den der Schrumpfschlauch montiert und aufgeschrumpft wird, (Außen-)Kanten aufweisen. Es hat sich gemäß einer wichtigen Weiterbildung der Erfindung gezeigt, dass ein Abrunden dieser Kanten durch mechanische Bearbeitung vor dem Bearbeiten des Oberflächenbereichs ebenfalls vorteilhaft ist. So kann auf diese Weise nach dem Umspritzen beispielsweise eine homogenere Spannungsverteilung erzielt werden und es können Kerbwirkungen minimiert werden.

Das Metallbauteil kann unabhängig davon ein längliches Bauteil sein, wobei der bearbeitete Oberflächenbereich ein winklig, insbesondere quer zu dessen Längserstreckung in Umfangsrichtung umlaufender, zusammenhängender Streifen sein kann. Dieser Streifen kann sich dabei vorteilhafter Weise ringsherum in Umfangsrichtung entlang jeweils benachbarter (Außen-)Seiten des Metallbauteils erstrecken.

Das Metallbauteil kann im Übrigen an gegenüberliegenden Seiten in dem bearbeiteten Oberflächenbereich jeweils eine nach innen gerichtete Verjüngung oder Einschnürung aufweisen. Der Schrumpfschlauch ist oder wird in diesem Fall vorteilhafterweise im Bereich der Verjüngung oder Einschnürung montiert und aufgeschrumpft.

Was das Umspritzen mit dem Kunststoff betrifft, so erfolgt dies zweckmäßigerweise insbesondere im Rahmen eines Spritzgießvorgangs in einem Spritzgusswerkzeug, in das das Metallbauteil zu diesem Zweck eingelegt wird.

Insbesondere zur Verbesserung der Dichtwirkung können im Übrigen der bearbeitete Oberflächenbereich und/oder die Spritzgussform während des Umspritzens des Schrumpfschlauchs mit dem Kunststoff erwärmt werden, insbesondere mittels einer Induktionsheizung, mittels eines Lasers, mittels einer Wärmelampe, mittels eines Ofens oder mittels einer Widerstandsheizung.

Weitere Merkmale der vorliegenden Erfindung ergeben sich aus den beigefügten Patentansprüchen, der nachfolgenden Beschreibung eines bevorzugten Ausführungsbeispiels sowie aus den beigefügten Zeichnungen. Darin zeigt:
Fig. 1 ein gemäß dem erfindungsgemäßen Verfahren hergestelltes Hybridbauteil in einer ersten Schrägansicht,
Fig. 2 das Hybridbauteil aus Fig. 1 in einer zweiten Schrägansicht,

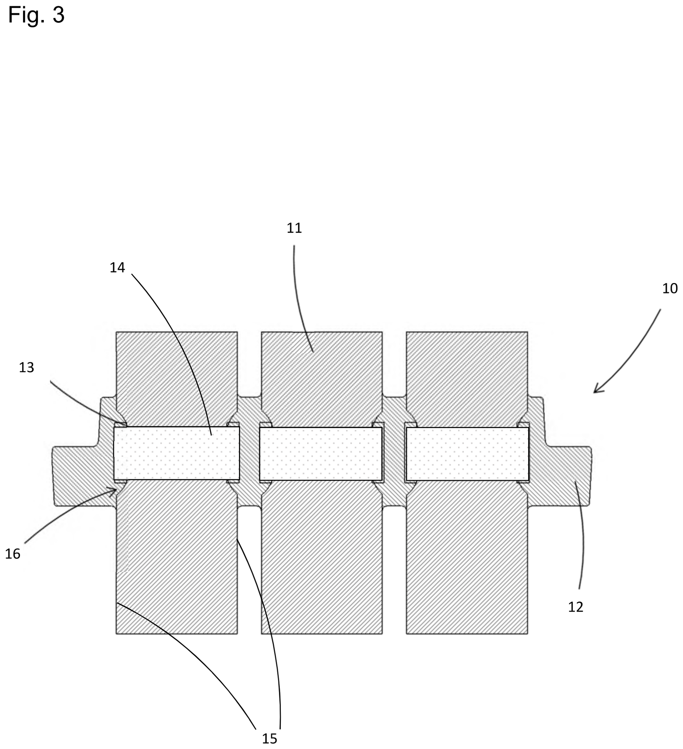

Fig. 3 einen Querschnitt durch das Hybridbauteil aus Fig. 1,
Fig. 4 verschiedene Phasen der Herstellung des Hybridbauteils aus Fig. 1.

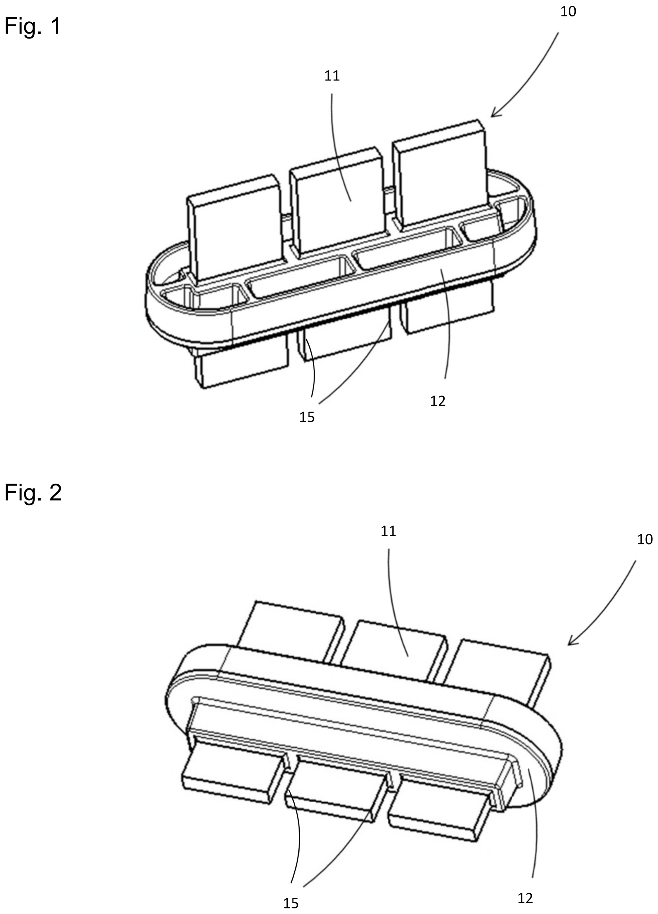

Das in der Fig. 1 gezeigte Hybridbauteil 10 umfasst drei massive Metallbauteile 11, die jeweils in ein gemeinsames Kunststoffbauteil 12 integriert sind. Letztlich bilden die Metallbauteile 11 Metalldurchführungen durch das Kunststoffbauteil 12.

Im vorliegenden Ausführungsbeispiel handelt es sich bei den massiven Metallbauteilen 11 um Leiterbahnen, insbesondere aus Kupfer. Solche Hybridbauteile 10 mit Leiterbahnen finden beispielsweise bei Elektromotoren Verwendung. Es versteht sich allerdings, dass die vorliegende Erfindung nicht auf derartige Hybridbauteile beschränkt ist.

Das Hybridbauteil 10 ist ein Spritzgussteil, wobei die Metallbauteile 11 dabei letztlich Einlegeteile sind, die im Spritzgussprozess von dem verwendeten Kunststoff umspritzt wurden.

Um die Dichtheit bzw. Langlebigkeit der Dichtheit zwischen dem jeweiligen Metallbauteil 11 und dem umspritzten Kunststoff signifikant zu erhöhen, erfolgt erfindungsgemäß die Herstellung des Hybridbauteils 10 in besonderer Weise.

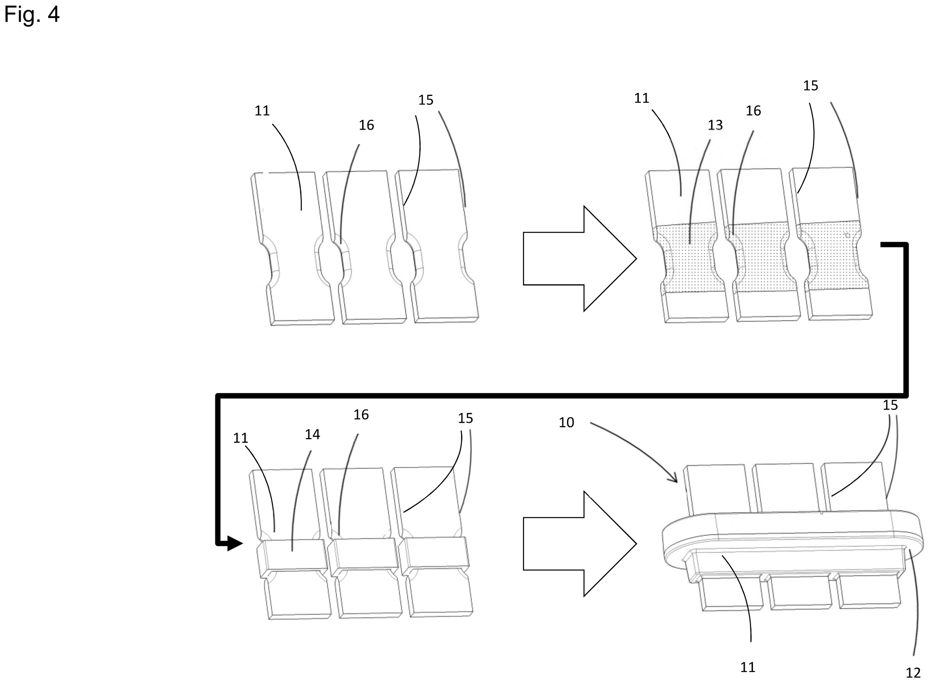

Wie insbesondere in Fig. 4 gezeigt ist, werden die einzelnen Metallbauteile 11 zunächst, bevor sie in dem späteren Spritzgussprozess umspritzt werden, in demjenigen Oberflächenbereich 13, in dem sie nachfolgend umspritzt werden bzw. auf den der Kunststoff aufgespritzt wird, so bearbeitet, dass in diesen insbesondere dreidimensionale Nano- und/oder Mikrostrukturen eingebracht werden, die eine Vergrößerung der Oberfläche in dem Oberflächenbereich 13 bewirken und/oder Hinterschneidungen umfassende Vertiefungen aufweisen und/oder Widerhaken.

Besonders bevorzugt werden diese durch Beaufschlagung mit einem Laserstrahl eines nicht gezeigten Lasers bzw. einer Lasereinheit eingebracht. Dies derart, dass in diesem Oberflächenbereich 13 die Oberfläche der Metallbauteile 11 jeweils durch mindestens partielles Aufschmelzen des Metallmaterials verändert wird. Es können aber auch andere geeignete Verfahren verwendet werden, wie etwa chemisches Ätzen.

Im vorliegenden Fall ist der bearbeitete Oberflächenbereich 13 jeweils streifenförmig ausgebildet und erstreckt sich umlaufend (in Umfangsrichtung) zusammenhängend entlang von vier jeweils benachbarten Seiten des vorliegend annähernd quaderförmigen Metallbauteils 11, nämlich von zwei großflächigen Vorder- und Rückseiten sowie von diese jeweils verbindenden Schmalseiten. Dies vorliegend winklig zur Längserstreckung des Metallbauteils 11 (hier im Wesentlichen senkrecht).

Es versteht sich, dass je nach Anwendungsfall die Form bzw. Kontur des Oberflächenbereichs auch anders ausgebildet sein kann.

In dem so bearbeiteten Oberflächenbereich 13 wird dann jeweils ein an sich bekannter Schrumpfschlauch 14 montiert und aufgeschrumpft.

Als Nächstes werden dann die Metallbauteile 11 zusammen mit dem Schrumpfschlauch 14 in ein nicht dargestelltes Spritzgusswerkzeug als Einlegeteile eingelegt und von dem Kunststoff des späteren Kunststoffbauteils 12 umspritzt.

Die vorherige Bearbeitung des Oberflächenbereichs 13 erhöht, wie sich gezeigt hat, massiv die Dichtheit zwischen dem Metallbauteil 11 und dem Schrumpfschlauch 14 und somit im Ergebnis auch zwischen dem Kunststoffbauteil 12 und dem Metallbauteil 11.

Um eine homogenere Spannungsverteilung zu erzielen und Kerbwirkungen zu minimieren, ist es zudem vorteilhaft, die Außenkanten 15 der Metallbauteile 11 im bearbeiteten Oberflächenbereich 13 mit bekannten mechanischen Verfahren abzurunden, insbesondere vor dem Bearbeiten des Oberflächenbereichs 13, vgl. insbesondere Fig. 4.

Weiter kann vorgesehen sein, die Metallbauteile 11 in dem bearbeiteten Oberflächenbereich 13 jeweils an gegenüberliegenden Seiten mit einer nach innen gerichteten Verjüngung oder Einschnürung 16 zu versehen bzw. mit einer solchen versehene Metallbauteile 11 zu verwenden. Auf diese Verjüngung/Einschnürung 16 wird dann der jeweilige Schrumpfschlauch 14 montiert und aufgeschrumpft. Hierdurch wird der Sitz des jeweiligen Schrumpfschlauchs 14 auf dem bearbeiteten Oberflächenbereich 13 verbessert.

### Bezugszeichenliste:

- 10: Hybridbauteil
- 11: Metallbauteil
- 12: Kunststoffbauteil
- 13: bearbeiteter Oberflächenbereich
- 14: Schrumpfschlauch
- 15: Außenkanten
- 16: Verjüngung

## Patentansprüche

1. Verfahren zum Herstellen eines Hybridbauteils (10) mit mindestens einem, insbesondere massivem Metallbauteil (11), das mindestens bereichsweise von Kunststoff umspritzt ist, insbesondere einem Kupferbauteil, bevorzugt einer Leiterbahn zur Leitung von elektrischem Strom, **gekennzeichnet durch** folgende Schritte:
a) Bearbeiten eines Oberflächenbereichs (13) des Metallbauteils (11) mit einem Laserstrahl, so dass Nano- und/oder Mikrostrukturen in diesen Oberflächenbereich (13) eingebracht werden,
b) Montieren und Aufschrumpfen eines Schrumpfschlauchs (14) auf den bearbeiteten Oberflächenbereich (13) des Metallbauteils (11) unter Anlage des Schrumpfschlauchs (14) an die Metalloberfläche, und danach Umspritzen des montierten und aufgeschrumpften Schrumpfschlauchs (14) mit Kunststoff unter Anlage des Kunststoffs an dem Schrumpfschlauch (14).

2. Verfahren gemäß Anspruch 1, **dadurch gekennzeichnet, dass** die Nano- und/oder Mikrostrukturen eine Vergrößerung der Oberfläche in dem Oberflächenbereich (13) bewirken und/oder Hinterschneidungen umfassende Vertiefungen aufweisen und/oder Widerhaken,

3. Verfahren gemäß einem oder mehreren der vorhergehenden Ansprüch, **dadurch gekennzeichnet, dass** das Metallbauteil (11) in dem von dem Laserstrahl bearbeiteten Oberflächenbereich (13), auf den der Schrumpfschlauch (14) montiert und aufgeschrumpft wird, Kanten aufweist, und dass diese Kanten vor dem Bearbeiten des Oberflächenbereichs (13) mit dem Laserstrahl durch mechanische Bearbeitung abgerundet werden.

4. Verfahren gemäß einem oder mehreren der vorhergehenden Ansprüche, **dadurch gekennzeichnet, dass** das Metallbauteil (11) ein längliches Bauteil ist und dass der bearbeitete Oberflächenbereich (13) ein winklig, insbesondere quer zu dessen Längserstreckung umlaufender, zusammenhängender Streifen ist.

5. Verfahren gemäß einen oder mehreren der vorhergehenden Ansprüche, **dadurch gekennzeichnet, dass** das Metallbauteil (11) an gegenüberliegenden Seiten in dem bearbeiten Oberflächenbereich (13) jeweils eine nach innen gerichtete Verjüngung oder Einschnürung aufweist.

6. Verfahren gemäß Anspruch 5, **dadurch gekennzeichnet, dass** der Schrumpfschlauch (14) im Bereich der Verjüngung oder Einschnürung montiert und aufgeschrumpft wird.

7. Verfahren gemäß einem oder mehreren der vorhergehenden Ansprüche, **dadurch gekennzeichnet, dass** das Umspritzen im Rahmen eines Spritzgießvorgangs in einem Spritzgusswerkzeug erfolgt, in das das Metallbauteil (11) zu diesem Zweck eingelegt wird.

8. Verfahren gemäß einem oder mehreren der vorhergehenden Ansprüche, **dadurch gekennzeichnet, dass** der bearbeitete Oberflächenbereich und/oder die Spritzgussform während des Umspritzens des Schrumpfschlauchs mit dem Kunststoff erwärmt wird, insbesondere mittels einer Induktionsheizung, mittels eines Lasers, mittels einer Wärmelampe, mittels eines Ofens oder mittels einer Widerstandsheizung.
